(19) Europäisches Patentamt
European Patent Office
Office européen des brevets

(11) **EP 2 619 426 B1**

(12) **FASCICULE DE BREVET EUROPEEN**

(45) Date de publication et mention de la délivrance du brevet:
**10.06.2015 Bulletin 2015/24**

(51) Int Cl.:
**F01N 11/00** (2006.01)   **F01N 9/00** (2006.01)

(21) Numéro de dépôt: **11743104.9**

(22) Date de dépôt: **07.07.2011**

(86) Numéro de dépôt international:
**PCT/FR2011/051614**

(87) Numéro de publication internationale:
**WO 2012/038627 (29.03.2012 Gazette 2012/13)**

(54) **PROCEDE D'ESTIMATION ADAPTATIVE D'UNE CHARGE COURANTE EN SUIE D'UN FILTRE A PARTICULES**

VEFAHREN ZUR ADAPTIVEN BEURTEILUNG DER MOMENTANEN RUSSLAST EINES PARTIKELFILTES

PROCEDURE FOR ADAPTIVELY ESTIMATING THE CURRENT SOOT LOADING OF A PARTICULATE FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2010 FR 1057596**

(43) Date de publication de la demande:
**31.07.2013 Bulletin 2013/31**

(73) Titulaire: **Renault S.A.S.**
**92100 Boulogne-Billancourt (FR)**

(72) Inventeurs:
• **TURPIN, Thomas**
  **F-91940 Les Ulis (FR)**
• **BERARD, Sandrine**
  **F-91770 Saint Vrain (FR)**
• **DI-PENTA, Damiano**
  **F-75012 Paris (FR)**

(56) Documents cités:
**US-A1- 2003 167 757     US-A1- 2009 308 052**

• **HARALAMPOUS O A ET AL: "Diesel particulate filter pressure drop Part 1: modelling and experimental validation", INTERNATIONAL JOURNAL OF ENGINE RESEARCH, PROFESSIONAL ENGINEERING PUBLISHING, GB, vol. 5, no. 2, 1 janvier 2004 (2004-01-01) , pages 149-162, XP008116940, ISSN: 1468-0874, DOI: DOI:10.1243/146808704773564550**

EP 2 619 426 B1

**Description**

La présente invention concerne, de façon générale, le domaine des systèmes de post-traitement des gaz d'échappement et, en particulier, des filtres à particules permettant de réduire les émissions de particules produites par des moteurs à combustion interne, notamment, les moteurs du type Diesel.

Plus précisément, l'invention concerne selon un premier de ses aspects un procédé d'estimation adaptative d'une charge courante en suie d'un filtre à particules présentant à ses bornes une pression différentielle et disposé dans une ligne d'échappement d'un moteur à combustion interne, de préférence installé sur un véhicule, par exemple, sur un véhicule automobile, le procédé d'estimation étant mis en oeuvre par un calculateur associé :

- à un capteur différentiel adapté à mesurer la pression différentielle et
- à un moyen adapté à déterminer un débit volumique des gaz d'échappement dans la ligne d'échappement.

Le procédé d'estimation comprend :

- une étape,de sélection d'une masse de suie caractéristique à partir d'une première cartographie de données propre à des gammes prédéterminées de débits volumiques déterminés des gaz d'échappement et de pression différentielles mesurées ;
- une première étape de détermination du débit volumique (Q) ;
- une seconde étape de mesure de la pression différentielle (P).

Le capteur de pression différentiel peut également correspondre à deux capteurs de pressions adaptés à mesurer la pression en amont et en aval du filtre à particules.

Le moyen de détermination du débit volumique des gaz d'échappement peut consister en un débitmètre placé dans un circuit d'admission d'air du moteur, et fournissant une information de débit à un calculateur qui est apte à déterminer, en fonction de l'information de débit et de paramètres de fonctionnement du moteur, le débit volumique des gaz d'échappement.

Un procédé de ce type est décrit dans la demande de brevet aux Etats-Unis d'Amérique US 2003/0167757 A1. Ce procédé préenregistré permet d'estimer la charge courante en suie du filtre à particules en fonction de pressions différentielles mesurées à ses bornes et du débit volumique mesurés des gaz d'échappement, à l'aide d'un modèle d'émission du moteur basé sur des calculs utilisant le premier massif de données. Cependant, la charge courante ainsi obtenue présente des dispersions insatisfaisantes, dues aux erreurs du capteur différentiel et/ou du capteur de débit qui conduisent à régénérer plus souvent le filtre à particules et, in fine, tend à augmenter la consommation en carburant.

Dans ce contexte, la présente invention a pour but de proposer un procédé d'estimation visant au moins à réduire la limitation précédemment évoquée.

A cette fin, le procédé d'estimation, par ailleurs conforme à la définition générique qu'en donne le préambule ci-dessus, est essentiellement caractérisé en ce qu'il comporte une étape d'identification du mode de fonctionnement moteur correspondant à une phase de fonctionnement du moteur et donc du filtre à particules, notamment ce dernier peut-être dans une phase normale de fonctionnement, une phase dite de régénération ou encore une phase de démarrage à froid, L'identification du mode de fonctionnement moteur permet d'exécuter un procédé d'évaluation de la masse de suie appropriée aux conditions de fonctionnement caractéristiques du mode de fonctionnement moteur.

En outre, le procédé comporte des étapes suivantes consistant à :

- calculer une pression différentielle modélisée ($p_{R0}$, $p_{R1}$, $p_{R2}$) à partir d'une seconde cartographie de données préenregistrée permettant d'établir pour une masse de suie donnée et un débit d'échappement donné une valeur de pression différentielle modélisée ($p_{R0}$, $p_{R1}$, $p_{R2}$) ;
- comparer le débit volumique d'échappement (Q) avec un seuil de débit volumique d'échappement ($Q_0$, $Q_1$, $Q_2$) préenregistré et correspondant à un mode de fonctionnement moteur, lorsque le débit volumique d'échappement (Q) est supérieur au seuil, le procédé comprenant :

  o une étape de calcul d'un premier écart ($\Delta_0$, $\Delta_1$, $\Delta_2$), pour ledit débit volumique mesuré (Q), entre la pression différentielle mesurée (P) et la pression différentielle modélisées ($p_{R0}$, $p_{R1}$, $P_{R2}$) ;
  o une étape de calcul d'un second écart ($\Delta_{R0}$, $\Delta_{R1}$, $\Delta_{R2}$) obtenu par le produit du premier écart ($\Delta_0$, $\Delta_1$, $\Delta_2$) à un gain (Ko, $K_1$, $K_2$) préenregistré et correspondant à un mode de fonctionnement moteur.

Grâce à ce mode de fonctionnement, le procédé d'estimation selon l'invention présente un lien de retour permettant d'ajuster l'estimation de la charge courante en suie pour minimiser ainsi l'impact des dispersions des capteurs pour régénérer moins souvent le filtre à particules et, in fine, contribuer en réduction de la consommation du moteur en carburant.

D'autres caractéristiques et avantages de l'invention ressortiront clairement de la description qui en est faite ci-après, à titre indicatif et nullement limitatif, en référence aux dessins annexés, dans lesquels :

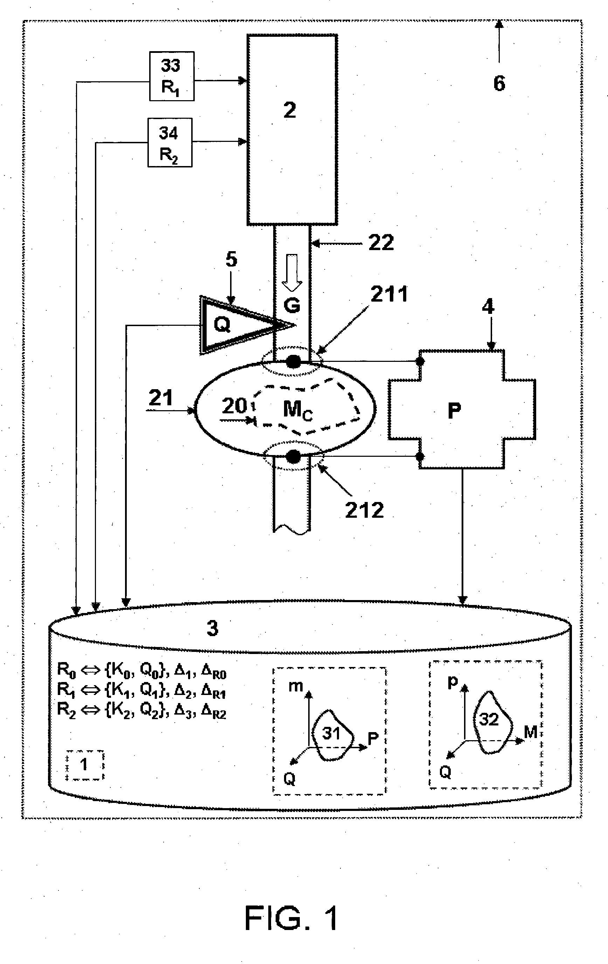

- la figure 1 illustre schématiquement un dispositif permettant de mettre en oeuvre le procédé selon l'invention embarqué sur un véhicule et convenant à la mise en oeuvre du procédé d'estimation selon l'invention,

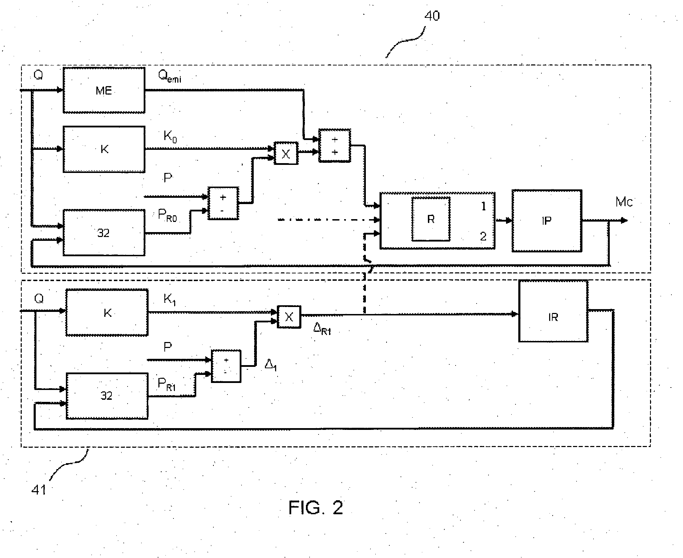

■ La figure 2 représente une mise en oeuvre d'un procédé de l'invention dans laquelle un premier estimateur de la masse de suie est couplé à un second estimateur adapté à une phase dite de régénération ;

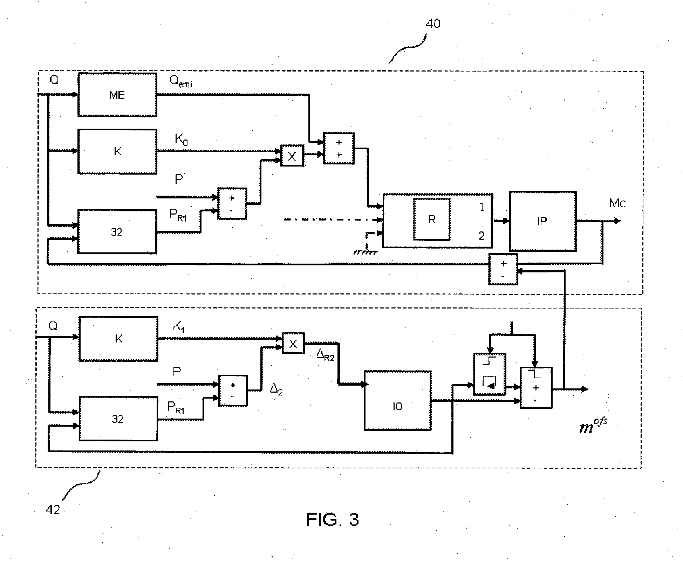

■ La figure 3 représente une mise en oeuvre d'un procédé de l'invention dans laquelle un premier estimateur est couplé à un troisième estimateur adapté à une phase de démarrage à froid ;

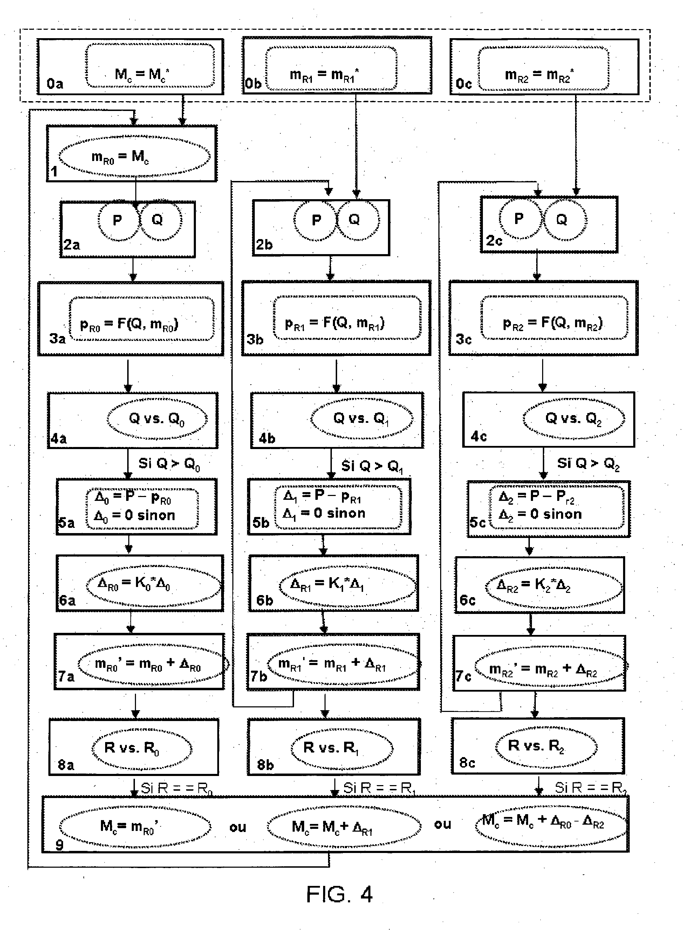

■ la figure 4 illustre schématiquement une succession des étapes du procédé selon l'invention comprenant trois estimateurs correspondant respectivement à trois modes de fonctionnement moteur.

Comme annoncé précédemment et illustré sur la figure 1, l'invention concerne, selon un premier de ses aspects, un procédé d'estimation 1 adaptative d'une charge courante $M_C$ en suie 20 d'un filtre 21 à particules, noté FAP dans la suite de la description. Ce dernier présente à ses bornes 211, 212 une pression différentielle P et est disposé dans une ligne d'échappement 22 d'un moteur 2 à combustion interne. Le procédé d'estimation 1 est mis en oeuvre par un calculateur 3 associé à des moyens de mesure de la pression différentielle P et des moyens de détermination d'un débit volumique Q des gaz d'échappement G dans la ligne d'échappement 22.

Comme illustré sur la figure 1, le calculateur 3 est associé :

■ à un capteur différentiel 4 adapté à mesurer la pression différentielle P, et
■ à un moyen 5 adapté à déterminer un débit volumique Q des gaz d'échappement G dans la ligne d'échappement 22.

Comme illustré sur la figure 1, le moteur 2 et le calculateur 3 sont embarqués sur un véhicule 6, par exemple, sur une voiture automobile.

Le calculateur 3 est de préférence muni :

■ d'une unité centrale de traitement dite CPU (en anglais Central Processing Unit), par exemple, multitâches, et
■ des moyens de mémorisation non représentés pour enregistrer des données et/ou des informations.

L'invention permet de prendre en compte différents modes de fonctionnement moteur applicables au véhicule de manière à limiter les dispersions dues aux erreurs des capteurs dans le calcul de la masse de suie dans le FAP, notamment des dispersions de mesure. En effet, selon le mode de fonctionnement moteur appliqué, le filtre à particules comporte différentes phases de fonctionnement. Lesdites phases de fonctionnement du FAP comportent des conditions initiales et un modèle d'estimation de la masse de suie qui est propre au mode de fonctionnement moteur. Le procédé de l'invention permet donc, par la prise en compte du mode de fonctionnement moteur, de corriger le biais induit par le mode de fonctionnement du FAP et donc d'estimer une masse de suie présente dans le filtre à particules de manière plus fiable.

A un mode de fonctionnement moteur donné, correspond une phase de fonctionnement du filtre à particules.

Le procédé de l'invention permet d'identifier le mode de fonctionnement moteur parmi :

- un premier mode de fonctionnement nominal, noté $R_0$, pour lequel un premier ensemble de conditions prédéterminées permettent d'exécuter un premier estimateur de la masse de suie dans le FAP ;
- un second mode de fonctionnement moteur, noté $R_1$, correspondant à une phase de régénération du FAP, pour lequel un second ensemble de données prédéterminées permettent d'exécuter un second estimateur permettant de prendre en compte une masse de suie résiduelle non détectée par le premier estimateur lors d'un fonctionnement nominal ;
- Un troisième mode de fonctionnement moteur, noté $R_2$, correspondant à une phase dite de démarrage à froid du FAP pour lequel un troisième ensemble de données permettent d'exécuter un troisième estimateur permettant de prendre en compte un écart de masse dit d'« offset à froid » dans l'estimation de la masse de suie dans le FAP.

Le procédé de l'invention comprend le premier, le second ou le troisième estimateur ainsi que toutes combinaisons des dits estimateurs permettant d'évaluer la masse de suie dans le FAP, par exemple lors de transitions du mode de fonctionnement moteur.

Le mode de fonctionnement nominal établi $R_0$ est généralement observé entre deux régénérations successives du filtre 21 à particules. Ce mode de fonctionnement est établi lorsque le moteur 2 présente une température conforme aux exigences du constructeur du moteur, par exemple, une température sensiblement égale à environ 90°C.

Le procédé de l'invention nécessite donc d'identifier le mode de fonctionnement moteur $R_0$, $R_1$, $R_2$ et d'asservir le procédé à partir des données de sorties de l'estimateur le plus approprié audit mode de fonctionnement moteur identifié.

Un avantage du procédé selon l'invention est qu'un mode de réalisation privilégié permet l'exécution simultanée du premier, second et troisième estimateur.

Dans ce mode de réalisation, l'identification du mode de fonctionnement moteur permet de réinjecter, selon les écarts de masse identifiés, dans chacun des estimateurs les données appropriées à l'asservissement du procédé de l'invention.

La variation de la masse de suie dans le FAP, suit une fonction définie par la relation suivante :

$$\frac{dm^{esti}}{dt} = Q_{emi} + K_{obs}.(P - P_R) \quad ;$$

Où:

• $\dfrac{dm^{esti}}{dt}$ représente la variation de masse de suie dans le FAP, un estimateur comporte donc généralement un intégrateur permettant d'évaluer la masse à partir du calcul d'une variation de masse et une masse initiale.

• $Q_{emi}$ représente un modèle d'émission des gaz d'échappement, ce modèle est représentatif à des débits peu élevés, un seuil $Q_{seuil}$ est donc défini au delà duquel le modèle d'émission n'est plus pris en compte.

• $K_{obs}$ représente le gain de l'estimateur, ce paramètre permet de définir le compromis entre la convergence et le lissage de l'estimateur. Le gain peut être défini comme une constante ou une fonction du débit volumique de l'échappement des gaz.

• $(P-P_R)$ représente la différence de pression différentielle aux bornes du FAP entre la pression différentielle P détectée par les capteurs et la pression différentielle $P_R$ estimée à partir d'une seconde cartographie 32 de données dépendante du débit volumique d'échappement des gaz.

Dans le procédé de l'invention, les trois estimateurs comportent les notations, suivantes :
Concernant le premier estimateur :

- $Q_{seuil} = Q_0$
- $K_{obs} = K_0$
- $P-P_R = P-P_{R0} = \Delta_0$
- $\Delta_{R0} = \Delta_0 \cdot K_0$

Concernant le second estimateur :

- $Q_{seuil} = Q_1$
- $K_{obs} = K_1$
- $P-P_R = P-P_{R1} = \Delta_1$
- $\Delta_{R1} = \Delta_1 \cdot K_1$

Concernant le troisième estimateur :

- $Q_{seuil} = Q_2$
- $K_{obs} = K_2$
- $P-P_R = P-P_{R2} = \Delta_2$
- $\Delta_{R2} = \Delta_2 \cdot K_2$

La figure 1 représente également une première cartographie 31 de données propre à des gammes prédéterminées de débits volumiques mesurés des gaz d'échappement et de pression différentielles mesurées qui permettent d'associer une masse caractéristique de suie.

La figure 1 représente en outre une seconde cartographie 32 de données permettant d'établir la pression différentielle $P_R$ estimée à partir en fonction du débit volumique d'échappement des gaz.

La figure 2 représente un mode de fonctionnement du procédé de l'invention dans lequel le premier estimateur 40 est mis en oeuvre notamment par un modèle d'émission ME, une seconde cartographie 32 de données permettant de calculer la pression modélisée $P_{R0}$ et un gain $K_0$ appliqué à la différence entre la mesure de la pression différentielle P appliquée aux bornes du FAP et de la pression modélisée $P_{R0}$.

Le modèle d'émission ME permet de modéliser les débits d'émission lorsque les débits mesurés sont faibles, ils sont alors comparés à un seuil permettant de définir le mode de calcul du débit volumique des gaz d'échappement.

En outre, la figure 2 représente un second bloc 41 représentant un second estimateur de la masse de suie dans le FAP, lors d'une phase de régénération du FAP.

Quelque soit le mode de fonctionnement moteur appliqué, le procédé d'estimation adaptative de l'invention permet, à partir d'une première cartographie, de préenregistrer un premier ensemble de valeurs de masse m estimées en suie propres à des gammes prédéterminées de débits volumiques déterminés Q des gaz d'échappement G et de pressions différentielles mesurées P.

Il s'agit d'une famille de fonction $F_1$ telle que la masse estimée puisse s'écrire : $m = F_1(Q, P)$ ;
où F1 est une fonction dépendante du débit volumique déterminé et de la pression différentielle mesurée aux bornes du filtre.

Le pré-enregistrement peut être réalisé à partit d'un calculateur 3 et d'au moins une interface homme-machine disposée, de préférence au moins sur un tableau de bord, et accessible à un conducteur du véhicule 6 et/ou à un garagiste,

Afin d'initialiser le procédé de l'invention avec une valeur de masse de suie initiale, il est par exemple possible d'affecter la masse de suie enregistrées à la dernière coupure moteur selon le précédent mode de fonctionnement moteur.

Le procédés quelque soit le mode de fonctionnement moteur appliqué permet de :

- déterminer le débit volumique Q des gaz d'échappement G dans la ligne d'échappement 22 à l'aide du moyen 5,
- mesurer la pression différentielle P des gaz d'échappement G dans la ligne d'échappement 22 à l'aide du capteur différentiel 4.

Le procédé de l'invention permet de calculer une pression différentielle modélisée ($p_{R0}$, $p_{R1}$, $P_{R2}$) à partir d'une seconde cartographie 32 préenregistrée permettant d'établir pour une masse de suie donnée et un débit d'échappement donné une valeur de pression différentielle modélisée ($p_{R0}$, $p_{R1}$, $p_{R2}$).

Il s'agit d'une famille de fonction $F_2$ telle que la pression estimée puisse s'écrire : $P_R = F_2(Q, M)$,

Ou $F_2$ est une fonction dépendante du débit volumique Q déterminé et de la masse M de suie présente dans le FAP.

En outre le procédé de l'invention permet de comparer le débit volumique d'échappement déterminé Q avec un seuil de débit volumique d'échappement ($Q_0$, $Q_1$, $Q_2$) préenregistré correspondant à un seuil et dont la valeur est associée à un mode de fonctionnement moteur.

Lorsque le débit déterminé Q est plus faible que le seuil, le modèle d'émission est utilisé dans le premier estimateur 40 et les valeurs mesurées par le second 41 et le troisième 42 estimateurs ne sont pas prises en compte dans le procédé d'estimation de la masse de suie dans le FAP.

Dans chacun des estimateurs, lorsque le débit volumique déterminé Q dépasse la valeur seuil $Q_{seuil}$, le procédé permet de :

 o calculer par le calculateur 3, pour ledit débit volumique déterminé Q, un premier écart $\Delta_{i,\ i\in[0,\ 1,\ 2]}$ entre la pression différentielle mesurée P et la pression différentielle estimée $P_{Ri}$ : $\Delta_i = P - P_{RI}$,
 o corriger par le calculateur 3, le premier écart $\Delta_i$ à l'aide du premier gain $K_{i\ i\in[0,2]}$ pour obtenir un premier écart corrigé $\Delta_{Ri}$ : $\Delta_{Ri} = F_1(K_i, \Delta_{i.})$.

Concernant le premier estimateur, une étape du procédé de l'invention consiste à obtenir par le calculateur 3 la charge courante Mc en suie 20 du filtre 21 en additionnant la charge estimée $m_{R0}$ à l'aide de la première cartographie 31 de données avec le premier écart corrigé $\Delta_{R0}$ : $Mc = m_{RO} + \Delta_{R0}$.

L'invention permet de prendre en compte un deuxième mode de fonctionnement moteur qui impose de nouvelles conditions au filtre à particules. Ce second mode de fonctionnement du FAP est dit de « régénération ».

La prise en compte de ces conditions et donc de ce mode de fonctionnement moteur par le procédé de l'invention permet de calculer plus précisément la masse de suie dans le FAP.

Lors des phases de régénérations du FAP qui dure une dizaine de minutes, la masse de suie décroit rapidement et il est indispensable de suivre précisément la diminution de la masse afin d'arrêter la régénération lorsque la masse minimale est atteinte.

Le procédé de l'invention permet de prendre en compte un second estimateur représenté dans le bloc 41.

Les deux estimateurs sont préférentiellement exécutés en parallèle.

Le second estimateur 41 est basé sur les mêmes entrées, ainsi que la cartographie 32 de données. En revanche, le gain de pressions différentielles mesurées aux bornes du FAP est différent du premier estimateur, il est noté $K_1$.

En outre, ce second procédé n'utilise pas de modèle d'émission ME présent dans le premier estimateur. De plus, le second estimateur comprend un seuil de débit $Q_1$ ayant une valeur plus faible que le seuil de débit $Q_0$ du premier estimateur 41.

Le second estimateur converge plus vite, mais il est aussi potentiellement plus dispersif.

Lors des phases de régénération du FAP, le procédé de l'invention permet de mettre en oeuvre le second estimateur 41 approprié à ces dites phases dans lesquelles la masse de suie décroit plus rapidement et permet d'ajuster l'estimation de la masse présente dans le FAP au plus proche.

Lors d'une phase de régénération du FAP, la masse de suie estimée par le premier estimateur est diminuée de l'écart $\Delta_{R1}$ obtenu à partir du second estimateur 41.

Cette solution permet d'accélérer la convergence en phase de régénération en maintenant les faibles dispersions de l'estimateur 1.

Le second estimateur 41 est mis en oeuvre notamment à partir d'une seconde cartographie 32 de données permettant de calculer la pression modélisée $P_{R1}$ et un gain $K_1$ appliqué à la différence entre la mesure de la pression différentielle appliquée aux bornes du FAP et de la pression modélisée $P_{R1}$ ;

Le procédé de invention permet d'identifier le mode de fonctionnement moteur et d'appliquer un correctif $\Delta_{R1}$ calculée dans le second estimateur 41 à la mesure de la masse estimée de suie à partir du premier estimateur 40.

Le premier 40 estimateur comprend un intégrateur dit intégrateur principal et noté IP permettant d'obtenir la masse de suie à partir de la variation de la masse estimée et une valeur initiale de la masse de suie qui peut être la valeur précédemment calculée par le procédé de l'invention.

De même le second estimateur comprend un intégrateur noté IR.

En effet, le second estimateur 41 comprend un asservissement permettant de réinjecter la masse estimée dans les entrées du second estimateur 41.

A l'initialisation du procédé de l'invention, les masses d'initialisation ont été enregistrées à la dernière coupure du moteur. Les trois étapes d'affectation des masses de suies initiales se déroulent préférentiellement simultanément.

Le second estimateur 41 étant très réactif, le procédé permet d'appliquer la décroissance de masse estimée par ledit second estimateur en entrée de l'intégrateur principal IP du premier estimateur 40. Ce correctif permet de conserver un faible niveau de dispersions du premier estimateur 40.

La figure 3 représente un autre mode de fonctionnement dans lequel le procédé de l'invention est mis en oeuvre par un premier 40 et un troisième 42 estimateur. Le troisième estimateur 42 permet de prendre en compte les phases de démarrage à froid du FAP.

Le démarrage à froid induit un phénomène dit d' « offset à froid ». Le phénomène d'offset à froid est un phénomène supposé lié au collage des suies dans le FAP qui, dans certaines conditions de démarrage à froid, pour une même masse de suie, abaisse la pression différentielle, donc biaise l'estimation de la masse de suie notamment réalisé par le premier estimateur 40.

Ainsi, lorsque les conditions d'offset à froid sont réunies et détectées, par exemple la température de l'eau de refroidissement moteur est inférieure à un certain seuil au démarrage, on estime la masse dite « d'offset » qui n'est pas visible par le capteur de pression différentielle.

Cette estimation est réalisée rapidement de manière à ne pas confondre l'estimation de la masse d'offset avec le chargement du FAP.

Le procédé de l'invention, dans cette variante de réalisation, permet de combiner les estimations du premier estimateur 40 et du troisième estimateur 42, ces derniers comprenant chacun des constantes différentes, notamment des seuils caractéristiques différents.

Un seuil de débit $Q_2$ du troisième estimateur 42 est choisi préférentiellement plus bas que le seuil de débit $Q_0$ du premier estimateur 40.

Lorsque les conditions d'offset à froid sont détectées, la masse du premier estimateur 40 est fixée pendant une durée déterminée et le procédé de l'invention permet à partir du calculateur 3 de mémoriser la valeur de la masse évaluée par l'intégrateur d'offset, noté IO, du troisième estimateur 42.

Un flag peut être utilisé par le calculateur 3 de manière à détecter sur une mémoire trigger un front montant.

On applique la décroissante de masse mesurée par le troisième estimateur 42 sur la mesure de masse du premier estimateur 40.

Au bout du temps écoulé pour l'apprentissage, qui peut être détectée par un front descendant d'un flag d'offset, le procédé de l'invention permet de soustraire la valeur courante de masse évaluée par l'intégrateur d'offset IO du troisième estimateur 42 à la valeur mémorisée par l'intégrateur IP du premier estimateur déterminant ainsi un écart de masse $\Delta_{R2}$.

La figure 4 représente une succession d'étapes dans le cas où le procédé de l'invention comprend trois estimateurs combinés.

Selon les variantes de réalisations ces estimateurs peuvent être combinés de manière à couvrir différents modes de fonctionnement du mode de fonctionnement moteur.

Une variante de réalisation combine les trois estimateurs correspondant à un mode de fonctionnement nominal, à une phase de régénération du FAP et une phase d'offset à froid du FAP.

Le procédé mettant en oeuvre les trois estimateurs incrémente trois valeurs de masses de suies notées respectivement $m_{R0}$, $m_{R1}$, $m_{R2}$.

La masse de suie courante dans le FAP est notée $M_C$.

Trois premières étapes, notée respectivement 0a, 0b et 0c, permettent d'initialiser les valeurs d'entrées des masses de suies dans chacun des estimateurs 1, 2 et 3.

Ces valeurs sont, par exemple, les valeurs enregistrées à la dernière coupure du moteur.

Le premier estimateur est asservit par la valeur de masse de suie estimée Mc dans une étape 1, la masse $m_{R0}$ est donc prise égale à cette valeur.

Trois étapes 2a, 2b, 2c permettent d'acquérir la mesure de pression différentielle P aux bornes du FAP et de déterminer le débit volumique d'échappement Q des gaz d'échappement.

Trois étapes 3a, 3b, 3c permettent le calcul des pressions différentielles modélisées $p_{R0}$, $p_{R1}$, $p_{R2}$ via une cartographique 32 qui prédit une pression différentielle en fonction de la masse de suie et du débit d'échappement des gaz.

Trois étapes 4a, 4b, 4c permettent de comparer le débit d'échappement déterminé avec les seuils $Q_0$, $Q_1$, $Q_2$ respectivement de chacun des estimateurs.

Trois étapes 5a, 5b, 5c permettent de calculer en fonction du débit les différents écarts, notés respectivement $\Delta_0$, $\Delta_1$, $\Delta_2$ entre la pression différentielle mesurée P et les pressions modélisées $P_{R0}$, $p_{R1}$, $P_{R2}$.

Trois étapes 6a, 6b, 6c permettent de calculer des variations de masses $\Delta_{R0}$, $\Delta_{R1}$, $\Delta_{R2}$ de données par les produits des pressions modélisées $p_{R0}$, $P_{R1}$, $P_{R2}$ par les gains $K_0$, $K_1$, $K_2$ respectivement de chacun des estimateurs.

Une étape 7a permet d'incrémenter la masse $m_{R0}$ obtenue à partir de la cartographie 31 dans le premier estimateur 40 avec l'écart calculé $\Delta_{R0}$.

Les étapes 7b, 7c permettent d'incrémenter respectivement dans le second et le troisième les masses respectives $m_{R1}$, $m_{R2}$ avec les variations de masse $\Delta_{R1}$, $\Delta_{R2}$. Les nouvelles masses obtenues respectives $m_{R1}$, $m_{R2}$ sont en outre réinjectées en entrée des étapes 2b, 2c respectivement du second et du troisième estimateur.

Des étapes 8a, 8b, 8c permettent l'identification du mode de fonctionnement moteur R, le mode de fonctionnement nominal ou normal étant $R_0$, le mode de fonctionnement correspondant à la régénération du FAP étant noté $R_1$ et le mode de fonctionnement correspondant à une condition d'offset à froid étant noté $R_2$.

La dernière étape 9 du procédé permet d'évaluer la masse courante de suie Mc dans le FAP en fonction des données des trois estimateurs et de l'identification du mode de fonctionnement du moteur.

Si R = $R_0$, la nouvelle valeur $M_{R0}$ calculée à partir du premier estimateur 40 est affectée à l'estimation de la masse Mc qui est réinjectée dans l'étape 1 du procédé.

Si R = $R_1$, la valeur de la masse de suie estimée Mc est incrémentée de la variation de masse de suie $\Delta_{R1}$ calculée à partir du second estimateur 41.

Si R = $R_2$, la valeur de la masse de suie estimée Mc est incrémentée de la variation de masse de suie $\Delta_{R0}$ calculée à partir du premier estimateur 40 et décrémentée de la variation de la masse de suie $\Delta_{R2}$ calculée à partir du second estimateur 41.

Comme illustré sur la figure 1, le calculateur 3 peut être associé à des premiers moyens 33 adaptés à identifier un premier mode de fonctionnement $R_1$ exceptionnel (qui est différent dudit mode de fonctionnement établi $R_0$) de fonctionnement du moteur 2 propre à une régénération du filtre 21.

En outre, le calculateur 3 peut être associé également à des premiers moyens 34 adaptés à identifier un premier mode de fonctionnement $R_2$ exceptionnel (qui est différent dudit mode de fonctionnement établi $R_0$ et du mode de fonctionnement exceptionnel $R_1$) de fonctionnement du moteur 2 propre à une régénération du filtre 21.

Le premier mode de fonctionnement $R_1$ exceptionnel du moteur 2 dure approximativement quelques minutes pendant lesquelles la charge courante $M_C$ en suie 20 du filtre 21 à particules diminue brutalement ce qui tend à augmenter la dispersion de la mesure réalisée à l'aide du capteur différentiel 4 et de la détermination réalisée à l'aide du moyen 5.

Dans le second estimateur, le procédé de l'invention contribue à ce que, pendant le premier mode de fonctionnement $R_1$ exceptionnel, le lien de retour soit plus réactif, de sorte à ce que les calculs de la charge courante $M_C$ présentent moins de dispersion et, in fine, converge plus rapidement vers une valeur unique. Cela rend l'estimation de la masse de suie plus fiable.

De manière à optimiser l'estimation de la masse par le procédé de l'invention lorsque le premier et le troisième estimateur sont combinés, certaines conditions peuvent être choisies préférentiellement sur les valeurs de $K_0$, $K_1$, $Q_0$ et $Q_1$.

Le second estimateur comprend un deuxième seuil $Q_1$ qui est, de préférence, inférieur au premier seuil $Q_1$ et le deuxième gain $K_1$ comprend au moins une valeur supérieure à celles du premier gain $K_0$.

Cela contribue à rendre davantage convergent les calculs de la charge courante $M_C$. Il devient alors possible d'optimiser la configuration (et, notamment sa puissance en termes des calculs) du calculateur 3 par rapport à une précision voulue de ces calculs. Cela permet une meilleure maîtrise d'énergie consommée par le calculateur 3.

De préférence, le premier et le deuxième seuil $Q_0$, $Q_1$ présentent un premier ratio tel que : $Q_0/Q_1 \leq 3,5$.

Cela impose au procédé d'estimation 1 adaptative à ne traiter que les pressions différentielles P mesurées lorsque les débits volumiques Q se trouvent dans une gamme prédéterminée des valeurs. Cela contribue à limiter la dispersion de mesures due aux capteurs 4, 5 et, in fine, à rendre l'estimation de la masse de suie davantage plus fiable.

Avantageusement, le deuxième et le premier gains $K_1$, $K_0$ peuvent présenter un deuxième ratio tel que : $K_1/K_0 \leq 10$.

La prise en compte des différents mode de fonctionnements moteurs par trois estimateurs fonctionnant en parallèle permet d'adapter l'estimation de la masse de suie à la perte brutale de la suie 20 dans le filtre 21 à particules lors de sa régénération au cours du premier mode de fonctionnement $R_1$ exceptionnel de fonctionnement du moteur 2. Cela contribue à rendre davantage convergent le calcul de la charge courante $M_C$.

Le troisième mode de fonctionnement moteur propre à un démarrage à froid est observé lorsque le moteur 2 en fonctionnement (et, en particulier, son liquide de refroidissement) présente, par exemple au démarrage du moteur 2 (pendant une dizaine de minutes après son démarrage), une température inférieure à celle d'environ 90°C évoquée ci-dessus, propre au mode de fonctionnement établi $R_0$.

Dans ces conditions, les particules dans le filtre 21 s'accolent les unes contre les autres. Il en résulte que, pendant le troisième mode de fonctionnement $R_2$ exceptionnel, la suie 20 dans son ensemble présente au gaz d'échappement G une résistance accrue comparée à celle du mode de fonctionnement établi $R_0$. Cela tend à fausser les mesures produites par les capteurs 4, 5, et, in fine, les calculs de la charge courante Mc à la fin du troisième mode de fonctionnement $R_2$ exceptionnel.

Le troisième estimateur contribue à palier à cet inconvénient en corrigeant l'impact dudit artéfact (dû au phénomène d'accolage des particules dans le filtre 21) sur les calculs de la charge courante $M_c$ à la fin du troisième mode de fonctionnement $R_2$ exceptionnel de fonctionnement du moteur 2.

Dans ce troisième mode de fonctionnement du moteur, deux variantes permettent de combiner les estimations du premier et du troisième estimateur. Dans un premier mode, la valeur de la masse de suie calculée par le premier estimateur est figée pendant l'estimation du troisième estimateur. Dans un second mode, la valeur de la masse de suie calculée par le premier estimateur est évolue pendant l'estimation du troisième estimateur.

Dans le premier mode, la charge exceptionnelle Mc est figée au cours du troisième mode de fonctionnement $R_2$ et est égale à la valeur de la charge courante en suie 20 de la première étape du procédé.

Il devient alors possible d'optimiser la configuration (et, notamment sa puissance en termes des calculs) du calculateur 3 par rapport à la précision voulue des calculs de la charge courante $M_C$. Cela permet de mieux maîtriser l'énergie consommée par le calculateur 3.

Dans le second mode, la charge courante calculée par le premier estimateur évolue au cours du troisième mode de fonctionnement $R_2$ et est égale à la charge estimée calculée par le calculateur 3.

Cet agencement contribue à augmenter la précision des calculs de la charge courante $M_C$ à la fin du troisième mode de fonctionnement $R_2$.

De manière à optimiser l'estimation de la masse par le procédé de l'invention lorsque le premier et le troisième estimateur sont combinés, certaines conditions peuvent être choisies préférentiellement sur les valeurs de $K_0$, $K_2$, $Q_0$ et $Q_2$.

De préférence, dans ce troisième mode de fonctionnement du moteur, le troisième gain $K_3$ comprend au moins une valeur supérieure à celles du premier gain $K_1$.

Cela contribue à rendre davantage convergent les calculs de la charge courante $M_C$. Il devient alors possible d'optimiser la configuration (et, notamment sa puissance en termes des calculs) du calculateur 3 par rapport à la précision voulue de ces calculs. Cela permet une meilleure maîtrise d'énergie consommée par le calculateur 3.

Avantageusement, le premier et le troisième seuil $Q_0$, $Q_2$ peuvent présenter un troisième ratio tel que $Q_0/Q_2 \leq 3,5$.

Cela impose au procédé d'estimation 1 adaptative à ne traiter que les pressions différentielles P mesurées lorsque les débits volumiques Q se trouvent dans une gamme prédéterminée. Cela contribue à limiter la dispersion de mesures due aux capteurs 4, 5 et, in fine, à rendre le l'évaluation de la masse de suie dans le FAP plus fiable.

En outre, le troisième et le premier gain $K_2$, $K_1$ présentent, de préférence, un quatrième ratio tel que $K_2/K_1 < 10$.

Cela contribue à rendre davantage convergent les calculs de la charge courante $M_C$ malgré les dispersions des mesures issues des capteurs 4, 5 qui sont dues aux particules qui restent accolées les unes aux autres au cours du troisième mode de fonctionnement $R_2$ exceptionnel de fonctionnement du moteur 2.

De préférence, le deuxième et le troisième seuils $Q_1$, $Q_2$ sont confondus : $Q_1 = Q_2$, et le troisième gain $K_2$ est situé entre le premier et le deuxième gains $K_0$, $K_1$ tel que : $K_0 < K_2 < K_1$.

Cet agencement tend à optimiser la vitesse de convergence des calculs de la charge courante $M_C$ ce qui contribue, in fine, à fiabiliser les calculs propres au deuxième mode de fonctionnement $R_2$ exceptionnel de fonctionnement du moteur 2.

**Revendications**

1. Procédé d'estimation (1) adaptative d'une charge courante ($M_C$) en suie (20) d'un filtre (21) à particules présentant à ses bornes (211, 212) une pression différentielle (P) et disposé dans une ligne d'échappement (22) d'un moteur (2) à combustion interne, le procédé d'estimation (1) étant mis en oeuvre par un calculateur (3) associé :

   ▪ à un capteur différentiel (4) adapté à mesurer la pression différentielle (P), et ;
   ▪ à un moyen (5) adapté à déterminer un débit volumique (Q) des gaz d'échappement (G) dans la ligne d'échappement (22),

   le procédé d'estimation (1) comprenant :

   ▪ une étape de sélection d'une masse à partir d'une première cartographie (31) de suie initiale résiduelle ($m_{R0}$, $m_{R1}$, $m_{R2}$) correspondant à un mode de fonctionnement moteur;
   ▪ une première étape de détermination du débit volumique (Q),
   ▪ une seconde étape de mesure de la pression différentielle (P),

   **caractérisé en ce que** le procédé d'estimation (1) comporte des étapes suivantes consistant à :

   ▪ sélectionner une pression différentielle modélisée ($p_{R0}$, $p_{R1}$, $p_{R2}$) à partir d'une seconde cartographie (32) préenregistrée permettant d'établir une valeur de pression différentielle modélisée ($p_{R0}$, $p_{R1}$, $p_{R2}$) pour une masse de suie donnée et un débit d'échappement donné;
   ▪ comparer le débit volumique d'échappement déterminé (Q) avec un seuil de débit volumique d'échappement ($Q_0$, $Q_1$, $Q_2$) préenregistré et correspondant à un mode de fonctionnement moteur, lorsque le débit volumique d'échappement déterminé (Q) est supérieur au seuil, le procédé comprenant en outre :

      o une étape de calcul d'un premier écart ($\Delta_0$, $\Delta_1$, $\Delta_2$), pour ledit débit volumique déterminé (Q), entre la pression différentielle mesurée (P) et la pression différentielle modélisée ($p_{R0}$, $p_{R1}$, $p_{R2}$) ;
      o une étape de calcul d'un second écart ($\Delta R0$, $\Delta R1$, $\Delta R2$) obtenu par le produit du premier écart ($\Delta_0$, $\Delta_1$, $\Delta_2$) à un gain ($K_0$, $K_1$, $K_2$) préenregistré et correspondant à un mode de fonctionnement moteur.

2. Procédé d'estimation (1) adaptative d'une charge courante ($M_C$) selon la revendication 1, **caractérisé en ce qu'**un premier mode de fonctionnement moteur ($R_1$) correspond à un mode normal de fonctionnement du moteur dans lequel le gain préenregistré est un premier gain $K_0$ et dans lequel un modèle d'émission (ME) du débit d'échappement permet de définir un premier seuil de débit volumique d'échappement ($Q_0$), ledit procédé permettant de calculer la charge courante ($M_C$) en suie (20) du filtre (21) à partir de la somme de la masse caractéristique ($m_{R0}$) et du second écart ($\Delta_{R0}$).

3. Procédé d'estimation (1) adaptative d'une charge courante ($M_C$) selon la revendication 1, **caractérisé en ce qu'**un second mode de fonctionnement moteur correspond à une phase de régénération du filtre à particules, le procédé comprenant la définition d'un second gain ($K_1$) et d'un second seuil de débit volumique d'échappement ($Q_1$), la masse de suie sélectionnée étant incrémentée du second écart ($\Delta_{R1}$) et réinjectée dans l'étape de sélection de la masse de suie du procédé.

4. Procédé d'estimation (1) adaptative d'une charge courante (Mc) comprenant un premier procédé selon la revendication 2, appelé premier estimateur (40), et un second procédé selon la revendication 3, appelé second estimateur (41), **caractérisé en ce qu'**une étape d'identification du mode de fonctionnement moteur ($R_1$, $R_2$) permet d'asservir, selon le mode de fonctionnement moteur, l'étape de sélection du premier estimateur (40):

    o soit avec la valeur de la masse courante de suie calculée à partir du premier estimateur ;
    o soit avec la somme de :

       • la charge courante en suie ($M_C$) calculée à partir du premier estimateur, et
       • du second écart ($\Delta_{R1}$) calculé à partir du second estimateur.

5. Procédé d'estimation (1) adaptative d'une charge courante ($M_C$) selon la revendication 1, **caractérisé en ce qu'**un troisième mode de fonctionnement moteur correspond à une phase d'offset à froid, dans laquelle le gain préenregistré est un troisième gain $K_2$ et dans laquelle un modèle d'émission du débit d'échappement permet de définir un troisième seuil de débit volumique d'échappement ($Q_2$), la masse de suie sélectionnée étant incrémentée du second écart ($\Delta_{R2}$) et réinjectée dans l'étape de sélection de la masse de suie du procédé.

6. Procédé d'estimation (1) adaptative d'une charge courante ($M_C$) comprenant le premier estimateur selon la revendication 2 et un troisième procédé selon la revendication 5, appelé troisième estimateur, **caractérisé en ce qu'**une étape d'identification du mode de fonctionnement moteur ($R_1$, $R_3$) permet d'asservir, selon le mode de fonctionnement moteur, l'étape de sélection du premier procédé :

    ◦ soit avec la valeur de la masse courante de suie calculée à partir du premier estimateur ;
    o soit avec la valeur issue :

       • de la somme de la charge courante en suie (Mc) et du second écart ($\Delta_{R0}$) calculés à partir du premier estimateur et ;
       • de la soustraction de ladite somme précédemment obtenue du second écart ($\Delta_{R2}$) calculé à partir du troisième estimateur.

7. Procédé d'estimation (1) adaptative d'une charge courante ($M_C$) comprenant le premier estimateur, le second estimateur et le troisième estimateur selon les revendications 2, 3 et 5, **caractérisé en ce qu'**une étape d'identification du mode de fonctionnement moteur ($R_1$, $R_2$, $R_3$) permet d'asservir, selon le mode de fonctionnement moteur, l'étape de sélection du premier procédé :

    ◦ soit avec la valeur de la masse courante de suie calculée à partir du premier estimateur ;
    ◦ soit avec la valeur issue d'une première fonction qui consiste à faire la somme :

       • la charge courante en suie ($M_C$) calculée à partir du premier estimateur avec ;
       • le second écart ($\Delta_{R1}$) calculé à partir du second estimateur.

    ◦ soit avec la valeur issue d'une deuxième fonction qui consiste :

       • à faire la somme de la charge courante en suie (Mc) et du second écart ($\Delta_{R0}$) calculés à partir du premier estimateur et ;
       • à soustraire, de la somme précédemment obtenue, le second écart ($\Delta_{R2}$) calculé à partir du troisième estimateur.

8. Procédé d'estimation (1) adaptative d'une charge courante ($M_C$) selon l'une des revendications 4, 6 ou 7, **caractérisé en ce que** les estimateurs sont exécutés simultanément.

9. Procédé d'estimation (1) selon l'une quelconque des revendications 4 à 8, **caractérisé en ce que** le deuxième seuil ($Q_1$) est inférieur au premier seuil ($Q_0$) et **en ce que** le deuxième gain ($K_1$) comprend au moins une valeur supérieure à celles du premier gain ($K_0$).

10. Procédé d'estimation (1) selon l'une quelconque des revendications 4 à 9, **caractérisé en ce que** le premier et le deuxième seuils ($Q_0$), ($Q_1$) présentent un premier ratio de l'un sur l'autre inférieur ou égal à trois et demi : $Q_0/Q_1 \leq 3,5$, et **en ce que** le deuxième et le premier gains ($K_1$), ($K_0$) présentent un deuxième ratio de l'un sur l'autre inférieur ou égal à dix : $K_1/K_0 \leq 10$.

**Patentansprüche**

1. Adaptives Schätzverfahren (1) einer aktuellen Beladung ($M_C$) mit Ruß (20) eines Partikelfilters (21), der an seinen Anschlüssen (211, 212) einen Differentialdruck (P) aufweist und in einer Auspuffanlage (22) eines Verbrennungsmotors (2) angeordnet ist, wobei das Schätzverfahren (1) von einem Rechner (3) durchgeführt wird, der zugeordnet ist:

   • einem Differentialsensor (4), der geeignet ist, den Differentialdruck (P) zu messen, und
   • einer Einrichtung (5), die geeignet ist, einen Volumendurchsatz (Q) der Abgase (G) in der Auspuffanlage (22) zu bestimmen,

   wobei das Schätzverfahren (1) enthält:

   • einen Schritt der Auswahl einer Masse ausgehend von einem ersten Kennfeld (31) eines restlichen Anfangsrußes · ($m_{R0}$, $m_{R1}$, $m_{R2}$) entsprechend einer Motorbetriebsart;
   • einen ersten Schritt der Bestimmung des Volumendurchsatzes (Q),
   • einen zweiten Schritt der Messung des Differentialdrucks (P),

   **dadurch gekennzeichnet, dass** das Schätzverfahren (1) folgende Schritte aufweist, die darin bestehen:

   • einen modellisierten Differentialdruck ($P_{R0}$, $P_{R1}$, $P_{R2}$) ausgehend von einem vorab gespeicherten zweiten Kennfeld (32) auszuwählen, das es ermöglicht, einen modellisierten Differentialdruckwert ($P_{R0}$, $P_{R1}$, $P_{R2}$) für eine gegebene Rußmasse und einen gegebenen Abgasdurchsatz zu erstellen;
   • den bestimmten Abgas-Volumendurchsatz (Q) mit einer Abgas-Volumendurchsatzschwelle ($Q_0$, $Q_1$, $Q_2$) zu vergleichen, die vorab gespeichert wird und einer Motorbetriebsart entspricht, wenn der bestimmte Abgas-Volumendurchsatz (Q) höher als die Schwelle ist, wobei das Verfahren weiter enthält:

   o einen Schritt der Berechnung einer ersten Abweichung ($\Delta_0$, $\Delta_1$, $\Delta_2$), für den ersten bestimmten Volumendurchsatz (Q), zwischen dem gemessenen Differentialdruck (P) und dem modellisierten Differentialdruck ($P_{R0}$, $P_{R1}$, $P_{R2}$);
   o einen Schritt der Berechnung einer durch das Produkt aus der ersten Abweichung ($\Delta_0$, $\Delta_1$, $\Delta_2$) und einer Verstärkung ($K_0$, $K_1$, $K_2$) erhaltenen zweiten Abweichung ($\Delta_{R0}$, $\Delta_{R1}$, $\Delta_{R2}$), die vorab gespeichert wird und einer Motorbetriebsart entspricht.

2. Adaptives Schätzverfahren (1) einer aktuellen Beladung ($M_C$) nach Anspruch 1, **dadurch gekennzeichnet, dass** eine erste Motorbetriebsart ($R_1$) einer normalen Betriebsart des Motors entspricht, wobei die vorab gespeicherte Verstärkung eine erste Verstärkung $K_0$ ist, und wobei ein Emissionsmodell (ME) des Abgasdurchsatzes es ermöglicht, eine erste Abgas-Volumendurchsatzschwelle ($Q_0$) zu definieren, wobei das Verfahren es ermöglicht, die aktuelle Beladung ($M_C$) mit Ruß (20) des Filters (21) ausgehend von der Summe der charakteristischen Masse ($m_{R0}$) und der zweiten Abweichung ($\Delta_{R0}$) zu berechnen.

3. Adaptives Schätzverfahren (1) einer aktuellen Beladung ($M_C$) nach Anspruch 1, **dadurch gekennzeichnet, dass** eine zweite Motorbetriebsart einer Regenerationsphase des Partikelfilters entspricht, wobei das Verfahren die Definition einer zweiten Verstärkung ($K_1$) und einer zweiten Abgas-Volumendurchsatzschwelle ($Q_1$) enthält, wobei die ausgewählte Rußmasse mit der zweiten Abweichung ($\Delta_{R1}$) inkrementiert und in den Auswahlschritt der Rußmasse des Verfahrens rückgeführt wird.

4. Adaptives Schätzverfahren (1) einer aktuellen Beladung ($M_C$), das ein erstes Verfahren nach Anspruch 2, erste Schätzfunktion (40) genannt, und ein zweites Verfahren nach Anspruch 3, zweite Schätzfunktion (41) genannt, enthält, **dadurch gekennzeichnet, dass** ein Identifikationsschritt der Motorbetriebsart ($R_1$, $R_2$) es ermöglicht, den Auswahlschritt der Schätzfunktion (40) gemäß der Motorbetriebsart zu regeln:

   o entweder mit dem Wert der aktuellen Rußmasse berechnet ausgehend von der ersten Schätzfunktion;
   ◦ oder mit der Summe von:

   • der aktuellen Rußbeladung ($M_C$) berechnet ausgehend von der ersten Schätzfunktion, und
   • der zweiten Abweichung ($\Delta_{R1}$) berechnet ausgehend von der zweiten Schätzfunktion.

5. Adaptives Schätzverfahren (1) einer aktuellen Beladung ($M_C$) nach Anspruch 1, **dadurch gekennzeichnet, dass** eine dritte Motorbetriebsart einer Kalt-Offsetphase entspricht, wobei die vorab gespeicherte Verstärkung eine dritte Verstärkung $K_2$ ist, und wobei ein Emissionsmodell des Abgasdurchsatzes es ermöglicht, eine dritte Abgas-Volumendurchsatzschwelle ($Q_2$) zu definieren, wobei die ausgewählte Rußmasse mit der zweiten Abweichung ($\Delta_{R2}$) inkrementiert und in den Auswahlschritt der Rußmasse des Verfahren rückgeführt wird.

6. Adaptives Schätzverfahren (1) einer aktuellen Beladung ($M_C$), das die erste Schätzfunktion nach Anspruch 2 und ein drittes Verfahren nach Anspruch 5, dritte Schätzfunktion genannt, enthält, **dadurch gekennzeichnet, dass** ein Identifikationsschritt der Motorbetriebsart ($R_1$, $R_3$) es ermöglicht, den Auswahlschritt des ersten Verfahrens gemäß der Motorbetriebsart zu regeln mit:

    o entweder dem Wert der aktuellen Rußmasse berechnet ausgehend von der ersten Schätzfunktion;
    ◦ oder mit dem Wert stammend von:

        • der Summe der aktuellen Rußbeladung ($M_C$) und der zweiten Abweichung ($\Delta_{R0}$), die ausgehend von der ersten Schätzfunktion berechnet werden, und
        • der Subtraktion, von der vorher erhaltenen Summe, der zweiten Abweichung ($\Delta_{R2}$), berechnet ausgehend von der dritten Schätzfunktion.

7. Adaptives Schätzverfahren (1) einer aktuellen Beladung ($M_C$), das die erste Schätzfunktion, die zweite Schätzfunktion und die dritte Schätzfunktion nach den Ansprüchen 2, 3 und 5 enthält, **dadurch gekennzeichnet, dass** ein Identifikationsschritt der Motorbetriebsart ($R_1$, $R_2$, $R_3$) es ermöglicht, den Auswahlschritt des ersten Verfahrens gemäß der Motorbetriebsart zu regeln:

    o entweder mit dem Wert der aktuellen Rußmasse berechnet ausgehend von der ersten Schätzfunktion;
    ◦ oder mit dem von einer ersten Funktion stammenden Wert, die darin besteht, die Summe zu bilden aus:

        • der aktuellen Rußbeladung ($M_C$) berechnet ausgehend von der ersten Schätzfunktion mit:
        • der zweiten Abweichung ($\Delta_{R1}$) berechnet ausgehend von der zweiten Schätzfunktion,

    ◦ oder mit dem von einer zweiten Funktion stammenden Wert, die darin besteht:

        • die Summe der aktuellen Rußbeladung ($M_C$) und der zweiten Abweichung ($\Delta_{R0}$) zu bilden, die ausgehend von der ersten Schätzfunktion berechnet werden, und
        • von der vorher erhaltenen Summe die zweite Abweichung ($\Delta_{R2}$) zu subtrahieren, die ausgehend von der dritten Schätzfunktion berechnet wird.

8. Adaptives Schätzverfahren (1) einer aktuellen Beladung ($M_C$) nach einem der Ansprüche 4, 6 oder 7, **dadurch gekennzeichnet, dass** die Schätzfunktionen gleichzeitig ausgeführt werden.

9. Adaptives Schätzverfahren (1) einer aktuellen Beladung ($M_C$) nach einem der Ansprüche 4 bis 8, **dadurch gekennzeichnet, dass** die zweite Schwelle ($Q_1$) niedriger als die erste Schwelle ($Q_0$) ist, und dass die zweite Verstärkung ($K_1$) mindestens einen Wert höher als diejenigen der ersten Verstärkung ($K_0$) enthält.

10. Adaptives Schätzverfahren (1) einer aktuellen Beladung ($M_C$) nach einem der Ansprüche 4 bis 9, **dadurch gekennzeichnet, dass** die erste und die zweite Schwelle ($Q_0$), ($Q_1$) eine erste Verhältniszahl zueinander niedriger als oder gleich dreieinhalb enthalten: $Q_0/Q_1 \leq 3{,}5$, und dass die zweite und die erste Verstärkung ($K_1$), ($K_0$) eine zweite Verhältniszahl zueinander niedriger als oder gleich zehn enthalten: $K_1/K_0 \leq 10$.

**Claims**

1. Method for adaptively estimating (1) a current loading ($M_C$) of soot (20) of a particulate filter (21) having at its terminals (211, 212) a differential pressure (P) and positioned in an exhaust line (22) of an internal combustion engine (2), the estimation method (1) being implemented by a computer (3) associated:

    ▪ with a differential sensor (4) suitable for measuring the differential pressure (P), and;
    ▪ with a means (5) suitable for determining a volume flow rate (Q) of the exhaust gases (G) in the exhaust line (22),

the estimation method (1) comprising:

    ▪ a step of selecting a weight from a first mapping (31) of initial residual soot ($m_{R0}$, $m_{R1}$, $m_{R2}$) corresponding to an engine operating mode;
    ▪ a first step of determining the volume flow rate (Q),
    ▪ a second step of measuring the differential pressure (P),

**characterized in that** the estimation method (1) comprises subsequent steps consisting in:

    ▪ selecting a first differential pressure modeled ($p_{R0}$, $p_{R1}$, $p_{R2}$) from a second prerecorded mapping (32) making it possible to establish a modeled differential pressure value ($p_{R0}$, $p_{R1}$, $p_{R2}$) for a given weight of soot and a given exhaust flow rate;

■ comparing the determined exhaust volume flow rate (Q) with a prerecorded exhaust volume flow rate threshold ($Q_0$, $Q_1$, $Q_2$) and corresponding to an engine operating mode, when the determined exhaust volume flow rate (Q) is greater than the threshold, the method also comprising:

o a step of computing a first deviation ($\Delta_0$, $\Delta_1$, $\Delta_2$), for said determined volume flow rate (Q), between the measured differential pressure (P) and the modeled differential pressure ($p_{R0}$, $p_{R1}$, $p_{R2}$);

o a step of computing a second deviation ($\Delta R0$, $\Delta R1$, $\Delta R2$) obtained by the product of the first deviation ($\Delta_0$, $\Delta_1$, $\Delta_2$) with a prerecorded gain ($K_0$, $K_1$, $K_2$) and corresponding to an engine operating mode.

2. Method for adaptively estimating (1) a current loading ($M_C$) according to Claim 1, **characterized in that** a first engine operating mode ($R_1$) corresponds to a normal operating mode of the engine in which the prerecorded gain is a first gain $K_0$ and in which an emission model (ME) of the exhaust flow rate makes it possible to define a first exhaust volume flow rate threshold ($Q_0$), said method making it possible to compute a current loading ($M_C$) of soot (20) of the filter (21) from the sum of the characteristic weight ($m_{R0}$) and of the second deviation ($\Delta_{R0}$).

3. Method for adaptively estimating (1) a current loading ($M_C$) according to Claim 1, **characterized in that** a second engine operating mode corresponds to a phase of regeneration of the particulate filter, the method comprising the definition of a second gain ($K_1$) and of a second exhaust volume flow rate threshold ($Q_1$), the selected weight of soot being incremented by the second deviation ($\Delta_{R1}$) and reinjected in the soot weight selection step of the method.

4. Method for adaptively estimating (1) a current loading ($M_C$) comprising a first method according to Claim 2, called first estimator (40) and a second method according to Claim 3, called second estimator (41), **characterized in that** a step of identifying the engine operating mode ($R_1$, $R_2$) makes it possible to control, according to the engine operating mode, the step of selecting the first estimator (40):

o either with the value of the current weight of soot computed from the first estimator;
◦ or with the sum of:

• the current loading of soot ($M_C$) computed from the first estimator, and;
• the second deviation ($\Delta_{R1}$) computed from the second estimator.

5. Method for adaptively estimating (1) a current loading ($M_C$) according to Claim 1, **characterized in that** a third engine operating mode corresponds to a cold offset phase, in which the prerecorded gain in a third gain $K_2$ and in which an emission model of the exhaust flow rate makes it possible to define a third exhaust volume flow rate threshold ($Q_2$), the selected weight of soot being incremented by the second deviation ($\Delta_{R2}$) and reinjected in the soot weight selection step of the method.

6. Method for adaptively estimating (1) a current loading ($M_C$) comprising the first estimator according to Claim 2 and a third method according to Claim 5, called third estimator, **characterized in that** a step of identifying the engine operating mode ($R_1$, $R_3$) makes it possible to control, according to the engine operating mode, the selection step of the first method:

o either with the value of the current weight of soot computed from the first estimator;
◦ or with the value deriving:

• from the sum of the current loading of soot ($M_C$) and of the second deviation ($\Delta_{R0}$) computed from the first estimator, and;
• from the subtraction from said previously obtained sum of the second deviation ($\Delta_{R2}$) computed from the third estimator.

7. Method for adaptively estimating (1) a current loading ($M_C$) comprising the first estimator, the second estimator and the third estimator according to Claims 2, 3 and 5, **characterized in that** a step of identifying the engine operating mode ($R_1$, $R_2$, $R_3$) makes it possible to control, according to the engine operating mode, the selection step of the first method:

o either with the value of the current weight of soot computed from the first estimator;
◦ or with the value deriving from a first function which consists in calculating the sum:

• the current loading of soot ($M_C$) computed from the first estimator with;
• the second deviation ($\Delta_{R1}$) computed from the second estimator,

◦ or with the value deriving from a second function which consists:

• in calculating the sum of the current loading of soot ($M_C$) and of the second deviation ($\Delta_{R0}$) computed from the first estimator, and;
• in subtracting, from the previously obtained sum, the second deviation ($\Delta_{R2}$)

computed from the third estimator.

8. Method for adaptively estimating (1) a current loading ($M_C$) according to one of Claims 4, 6 or 7, **characterized in that** the estimators are executed simultaneously.

9. Estimation method (1) according to any one of Claims 4 to 8, **characterized in that** the second threshold ($Q_1$) is less than the first threshold ($Q_0$) and **in that** the second gain ($K_1$) comprises at least one value greater than those of the first gain ($K_0$).

10. Estimation method (1) according to any one of Claims 4 to 9, **characterized in that** the first and second thresholds ($Q_0$), ($Q_1$) have a first ratio relative to one another less than or equal to three and a half: $Q_0/Q_1 \leq 3.5$, and **in that** the second and first gains ($K_1$), ($K_0$) have a second ratio relative to one another less than or equal to 10: $K_1/K_1 \leq 10$.

FIG. 1

FIG. 2

FIG. 3

FIG. 4

**EP 2 619 426 B1**

## RÉFÉRENCES CITÉES DANS LA DESCRIPTION

**Documents brevets cités dans la description**

- US 20030167757 A1